Europäisches Patentamt

European Patent Office

Office européen des brevets

(11) Numéro de publication: **0 296 027**
**A1**

## (12) DEMANDE DE BREVET EUROPEEN

(21) Numéro de dépôt: 88401400.2

(22) Date de dépôt: 09.06.88

(51) Int. Cl.⁴: **D 06 N 7/00**
A 47 C 27/00

(30) Priorité: 12.06.87 FR 8708488

(43) Date de publication de la demande:
21.12.88 Bulletin 88/51

(84) Etats contractants désignés:
AT BE CH DE ES GB GR IT LI LU NL SE

(71) Demandeur: ETABLISSEMENTS DUFLOT & FILS
SOCIETE ANONYME DITE:
48, rue Gustave Scrive
F-59110 La Madeleine (FR)

(72) Inventeur: Duflot, Achille
1, route de Wattiessaert
F-59113 Seclin (FR)

(74) Mandataire: Lepage, Jean-Pierre
Cabinet Lemoine & Associés 12, Boulevard de la Liberté
F-59800 Lille (FR)

(54) Barrière textile anti-feu.

(57) L'invention est relative à une barrière textile anti-feu qui trouvera notamment son application dans le domaine de la sécurité pour réduire les dégagements de fumées et éviter la propagation de la flamme dans l'ameublement, l'habillement, les transports, les lieux publics ou autres.

La barrière textile anti-feu est destinée à former un écran entre un revêtement de garniture extérieur (2) et un rembourrage intérieur en mousse de polyuréthane (3) ou autre. Elle se compose d'un matelas de fibres (1) aiguilletées ou liaisonnées non feu, thermostables, telles que par exemple un polyacrylate réticulé. Selon la caractéristique de l'invention, le matelas (1) comprend une couche hétérogène (4) qui lui assure une fonction d'imperméabilité résistant à la chaleur.

L'invention concerne l'industrie textile.

Fig. 2

## Description

L'invention est relative à une barrière textile anti-feu qui trouvera notamment son application dans le domaine de la sécurité pour réduire les dégagements de fumée et éviter la propagation de la flamme dans l'ameublement, l'habillement, les transports, lieux publics ou autre.

A l'occasion d'accidents intervenus dans des lieux publics et transports de passagers par voie terrestre, aérienne ou maritime, une sensibilité toute particulière s'est créée au niveau de la lutte contre l'incendie. Il est en effet apparu que les dégagements de fumées et vapeurs nocives survenus à l'issue d'une collision étaient beaucoup plus meurtriers que la collision elle-même. L'évacuation des occupants du lieu sinistré demande généralement plusieurs minutes et durant ces instants il est capital de limiter le développement d'un incendie en cours et réduire les émanations de fumée. Cela permet d'éviter que la panique complique l'évacuation des occupants et par ailleurs, il faut garder une bonne visibilité dans l'enceinte à évacuer et éviter les pertes de conscience par inhalation de vapeurs toxiques.

Malheureusement, les techniques classiques de fabrication en matière d'ameublement étaient tout à fait incompatibles avec les objectifs de sécurité à atteindre. Généralement, le rembourrage des sièges était réalisé à l'aide de mousse de polyuréthane et la garniture du siège réalisée avec un tissu à base de fibres naturelles ou synthétiques de qualité courante. Dans ces conditions, en cas d'incendie, le tissu de revêtement se consume en propageant la flamme ou non mais en tous cas ne fait absolument pas écran à la pénétration de la flamme vers le rembourrage. La mousse de polyuréthane ou autre matière équivalente brûle en alimentant l'incendie avec un dégagement de fumées très important. L'incendie se développe par conséquent à grande vitesse avec toutes les conséquences désastreuses que cela implique.

Les administrations de tutelles se sont mobilisées pour imposer des normes de construction en matière d'ameublement et d'équipement de lieux publics et moyens de transport. En particulier, les matériaux utilisés doivent présenter des propriétés inifuges propres ou être disposés de telle sorte qu'ils soient à l'abri de la flamme pendant une durée jugée nécessaire pour permettre l'évacuation du lieu.

La présente invention a été plus particulièrement développée dans le cadre de la protection des sièges. Toutefois, son application pourra s'étendre à bien d'autres domaines dans lesquels il est nécessaire de former un écran anti-feu de séparation d'une zone à risque d'incendie vis-à-vis d'une zone renfermant des matériaux combustibles, l'écran devant lui même disposer de propriétés physiques de souplesse lui permettant de se déformer sous l'effet d'un effort extérieur.

Lorsque la barrière anti-feu à mettre en place doit servir à protéger un rembourrage de siège, formé par exemple d'un coussin de mousse de polyuréthane, il est indispensable d'utiliser un matériau comportant des propriétés textiles. En effet, le confort du siège constitue également un objectif à atteindre et donc, il faut que la barrière anti-feu soit souple, déformable, dispose d'une certaine tenue telle qu'on les rencontre avec les matières textiles.

Jusqu'à présent, les efforts se sont orientés vers la mise en place d'une barrière textile anti-feu disposée entre le matériau de rembourrage protégée et le tissu de garniture extérieur, réalisée sous la forme d'un matelas de fibres non feu.

Les fibres sont du type thermostable, ne réagissant pas à la chaleur et présentant de faibles dégagements de gaz sous l'action de la flamme. Les fibres de polyacrylate réticulé ou autres, thermostables, pures ou mélangées, donnent généralement satisfaction, on retiendra en particulier les fibres commercialisées par la Société COURTAULDS sous l'appellation "INIDEX".

La fibre ne brûle pas, elle carbonise. La fabrication du matelas est obtenue par cardage, nappage et liaison des fibres par aiguilletage ou autres procédés de liage ou fixation. Selon le degré de résistance au feu souhaité, l'épaisseur ou le poids du matelas peut varier.

Des expériences ont montré que l'emploi de ce type de barrière anti-feu permet de retarder notablement la propagation d'un incendie tout en minimisant les dégagements de fumée. Toutefois, dans certaines conditions d'essais sévères, seul l'emploi d'un matelas d'épaisseur importante permet de répondre aux normes. Or, les exigences de confort et d'économie ne permettent pas toujours d'employer une barrière anti-feu de forte épaisseur.

Le but principal de la présente invention est de présenter une barrière textile anti-feu qui dispose des propriétés de confort indispensables à son utilisation dans le domaine de la garniture d'ameublement et qui, malgré une épaisseur réduite, est particulièrement efficace pour répondre aux critères de sécurité les plus sévères.

En outre, un accent particulier est mis pour faciliter l'entretien des équipements munis d'une barrière textile anti-feu selon la présente invention. En effet, les barrières textiles anti-feu traditionnelles sont bien souvent incompatibles avec l'emploi d'un détachant en raison de la forte capacité d'absorption du matelas inifuge lui-même et du matériau de rembourrage intérieur.

En outre, la barrière textile anti-feu de la présente invention est compatible avec les techniques d'injection in situ de la mousse de polyuréthane.

D'autres avantages de la présente invention apparaîtront au cours de la description qui va suivre qui n'est cependant donnée qu'à titre indicatif et qui n'a pas pour but de la limiter.

La barrière textile anti-feu qui trouvera notamment son application dans le domaine de la sécurité pour réduire les dégagements de fumées et éviter la propagation de la flamme dans l'ameublement, l'habillement ou autres, destinée à former un écran entre un revêtement de garniture extérieur et un rembourrage intérieur, généralement en mousse de polyuréthane, qui se compose d'un matelas de fibres aiguilletées non feu, thermostables telles qu'un polyacrylate réticulé, est caractérisée par le fait que le matelas comprend sur au moins une face une couche hétérogène qui lui assure une fonction d'imperméabilité.

L'invention sera mieux comprise à la lecture de la description suivante, accompagnée de dessins en annexe, parmi lesquels :

- la figure 1 schématise en vue de coupe une structure textile anti-feu classique,

- la figure 2 illustre en vue de coupe la mise en place d'une barrière textile anti-feu selon la présente invention,

- la figure 3 représente en vue de coupe une barrière textile anti-feu armée selon la présente invention.

La présente invention vise une barrière textile anti-feu. Elle trouvera notamment son application dans le domaine de la sécurité pour réduire les dégagements de fumées et éviter la propagation de la flamme dans l'ameublement et l'habillement, ou autres.

L'invention a été plus particulièrement développée pour répondre à certaines normes de sécurité en ce qui concerne la construction de sièges pour lieux publics et transports de voyageurs. Toutefois, la barrière anti-feu pourra également être appliquée dans d'autres circonstances, telles que le textile mural, le revêtement de sol et autre.

Actuellement, pour des raisons de confort, la fabrication des sièges met en oeuvre des matériaux de rembourrage inflammables tels que la mousse de polyuréthane. Ce produit présente en outre le grave inconvénient d'émettre des vapeurs toxiques sous l'effet de la chaleur. C'est pourquoi son utilisation doit être accompagnée de précautions pour éviter qu'en cas d'incendie le matériau de rembourrage n'alimente la combustion.

C'est dans ce but que sont apparues les premières barrières textiles anti-feu confectionnées à partir de fibres non feu, thermorésistantes, sous la forme d'un matelas interposé entre le tissu de garniture extérieur et le matériau de rembourrage en mousse de polyuréthane. La barrière anti-feu forme un écran de protection thermique qui évite que la mousse ne soit soumise à l'action directe de la flamme ce qui permet de reculer notablement l'évolution de l'incendie. Le matelas de fibres non feu telles que le polyacrylate réticulé ne brûle pas mais carbonise, ce qui empêche la pénétration de la flamme au sein du matériau de rembourrage.

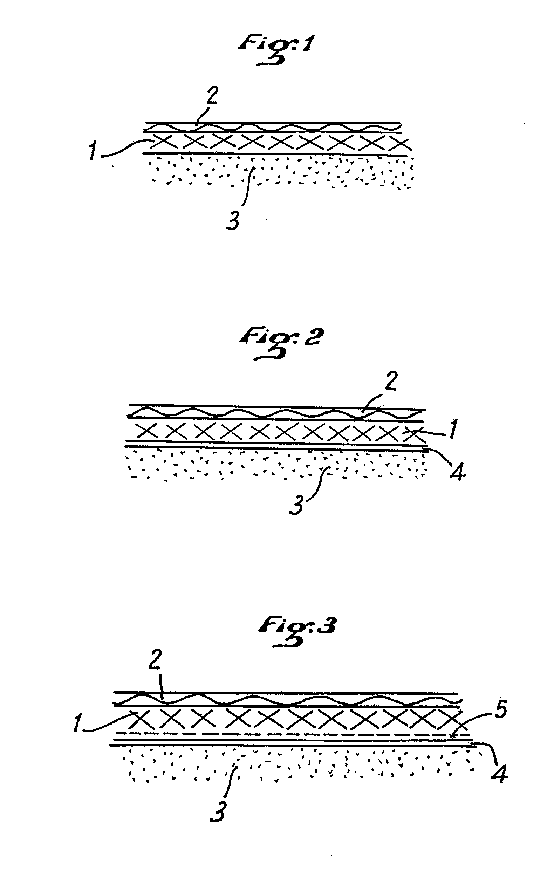

La figure 1 illustre, en vue de coupe, la structure d'une barrière textile anti-feu de type traditionnel. La barrière anti-feu (1) est interposée entre le tissu extérieur de garniture (2) et la mousse de rembourrage (3) généralement il s'agit de polyuréthane. La barrière anti-feu (1) est formée d'un matelas de fibres cardées, nappées et aiguilletées ou autre liaison pour assurer de la tenue à l'ensemble. Les fibres non feu de type thermostable ou autres conviennent à cet usage. On retient plus particulièrement le polyacrylate réticulé commercialisé sous l'appellation "INIDEX" par la Société COURTAULDS. Les fibres sont de longueur et de grosseur variées.

Cette structure traditionnelle comporte deux inconvénients. Tout d'abord, le nettoyage des sièges avec des détachants liquides ne donne pas satisfaction. En effet, en raison de la porosité de la mousse (3) et de la perméabilité de la barrière (1), les produits appliqués sur le tissu (2) pour ôter les tâches sont directement absorbés par la mousse (3).

Ensuite, lorsque la mousse (3) est injectée in situ, c'est-à-dire lorsque l'on procède à l'injection directe de la mousse (3) sous la garniture extérieure (2), il est indispensable de disposer d'un écran imperméable qui évite que la mousse encore liquide ne puisse filtrer à travers le revêtement. Cette technique de moulage est particulièrement économique puisqu'elle évite des opérations d'assemblage.

Précisément, ces inconvénients sont surmontés grâce à la barrière textile anti-feu de la présente invention dont la structure en coupe est illustrée à la figure 2. La barrière textile (1) interposée entre la garniture extérieure (2) et le matériau de rembourrage (3) comprend au moins sur une face une couche hétérogène (4) qui lui assure une fonction d'imperméabilité. Cette face peut être dirigée soit vers la garniture extérieure (2) ou soit vers le matériau de rembourrage (3).

On pourra par exemple inverser la position de l'enduction aux figures 2 et 3.

Grâce à sa fonction imperméable, la couche hétérogène (4) facilite le nettoyage du revêtement extérieur (2) étant donné que la mousse (3) ne peut, par porosité, absorber le liquide détachant utilisé.

Par ailleurs, la technique du moulage in situ peut parfaitement être employée, les infiltrations de la mousse (3) étant contenues grâce à la couche (4).

Avantageusement, ladite couche hétérogène (4) assure non seulement une fonction d'imperméabilité mais dispose également de caractéristiques résistantes à la chaleur. Cette propriété améliore les caractéristiques anti-feu du matelas de fibres (1).

En effet, une étude approfondie du comportement au feu de la barrière (1) montre qu'une des raisons de la propagation ou de l'entretien de la flamme provient de la fusion de la mousse (3) sous l'action de la chaleur qui, sous forme liquide, traverse le matelas de fibres anti-feu (1) et vient brûler en surface grâce à l'apport d'oxygène extérieure.

Pour retarder ce phénomène, la première solution consiste à augmenter l'épaisseur du matelas (1). Toutefois cette solution présente plusieurs inconvénients, d'une part elle est onéreuse et ensuite un matelas (1) épais peut rendre le fauteuil moins confortable.

Avec l'emploi d'une couche hétérogène (4) imperméable et résistante à la chaleur, on évite que la mousse liquide (3) ne puisse traverser le matelas (1) et ne vienne brûler en surface, ceci malgré l'emploi d'un matelas (1) de faible épaisseur.

Les propriétés anti-feu de la barrière (1) sont ainsi notablement améliorées sans renfort d'une épaisseur importante de fibres non-feu.

Cette couche hétérogène (4) peut se présenter sous la forme d'une enduction d'élastomère siliconé ininflammable. L'emploi d'une enduction de mousse de polyéthylène inifuge peut également être envisagé.

Une couche hétérogène formée par une feuille d'aluminium contrecollée a également été testée avec satisfaction.

Une enduction inifuge d'acrylique chargée d'alumine a également été réalisée. La couche d'enduction est déposée sur une face du matelas de fibres (1) puis l'ensemble est passé au four pour polymériser la couche d'enduction.

Dans certaines applications, il est parfois souhaitable de renforcer mécaniquement la barrière textile anti-feu. La figure 3 schématise précisément une barrière anti-feu composée d'un matelas de fibres non-feu (1) et d'une couche hétérogène ininflammable (4) avec une interposition entre ces deux éléments d'une grille de verre (5) ou autre support qui assure à l'ensemble une excellente tenue mécanique.

Parfois, l'enduction (4) est imperméable tout en présentant une faible microporosité en raison de sa faible épaisseur. L'enduction (4) peut se présenter par exemple sous la forme d'un film d'une densité voisine de 100 grammes par mètre carré avec quelques centièmes de millimètres d'épaisseur.

La tenue à la flamme du matelas de fibres non-feu (1) peut également être renforcée en y incorporant des fibres aux propriétés très spécifiques telles que les aramides ou autres.

D'autres mises en oeuvre de la présente invention, à la portée de l'Homme de l'Art, auraient également pu être envisagées sans pour autant sortir du cadre de celle-ci.

## Revendications

1. Barrière textile anti-feu qui trouvera notamment son application dans le domaine de la sécurité pour réduire les dégagements de fumées et éviter la propagation de la flamme dans l'ameublement, l'habillement, les transports, les lieux publics ou autres, destinée à former un écran entre un revêtement de garniture extérieur (2) et un rembourrage intérieur (3) qui se compose d'un matelas de fibres aiguilletées ou liaisonnées (1) non feu, thermostables, telles que par exemple un polyacrylate réticulé, **caractérisée** par le fait que le matelas comprend au moins sur une face une couche hétérogène (4) qui lui assure une fonction d'imperméabilité.

2. Barrière textile anti-feu, selon la revendication 1, **caractérisée** par le fait que le matelas (1) comprend sur au moins une face une couche hétérogène (4) qui lui assure une fonction d'imperméabilité résistant à la chaleur.

3. Barrière textile anti-feu, selon la revendication 2, **caractérisée** par le fait que le matelas (1) comprend une enduction (4) d'élastomère siliconé ininflammable.

4. Barrière textile anti-feu, selon la revendication 2, **caractérisée** par le fait que le matelas (1) comprend une enduction (4) de mousse de polyéthylène inifuge.

5. Barrière textile anti-feu, selon la revendication 2, **caractérisée** par le fait que la couche hétérogène (4) se présente sous la forme d'une feuille d'aluminium contrecollée.

6. Barrière textile anti-feu, selon la revendication 1, **caractérisée** par le fait qu'une grille de verre (5) ou autre support est interposé entre le matelas de fibres (1) et la couche hétérogène (4).

7. Barrière textile anti-feu, selon la revendication 1, **caractérisée** par le fait que la couche hétérogène (4) est déposée par enduction.

8. Barrière textile anti-feu, selon la revendication 2, **caractérisée** par le fait que le matelas (1) de fibres comprend une enduction inifuge (4) d'acrylique chargé d'alumine.

9. Barrière textile anti-feu, selon la revendication 8, **caractérisée** par le fait que la couche d'enduction (4) se présente sous la forme d'un film d'une densité voisine de 100 grammes par mètre carré.

0296027

## Fig. 1

## Fig. 2

## Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 017 581 (P. GÄHWYLER)<br>* Figure 1; revendications 1-6 *<br>--- | 1 | D 06 N 7/00<br>A 47 C 27/00 |
| A | US-A-3 818 521 (C. RICHARDS)<br>* Revendications 1,9; colonne 2, ligne 67 - colonne 3, ligne 5 *<br>--- | 1 | |
| A | GB-A-2 114 509 (TEXTILE BONDING)<br>* Résumé; page 1, lignes 37-74 *<br>--- | 1 | |
| A | CH-A- 558 855 (ETABLISSEMENTS RANDON & IMMAIN)<br>* Revendication *<br>----- | | |

**DOMAINES TECHNIQUES RECHERCHES (Int. Cl.4)**

D 06 N
A 47 C

Le présent rapport a été établi pour toutes les revendications

| Lieu de la recherche | Date d'achèvement de la recherche | Examinateur |
|---|---|---|
| LA HAYE | 12-09-1988 | PFANNENSTEIN H.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)